(19) Europäisches Patentamt
European Patent Office
Office européen des brevets

(11) **EP 0 709 981 B1**

(12) ## EUROPEAN PATENT SPECIFICATION

(45) Date of publication and mention
of the grant of the patent:
**09.01.2002 Bulletin 2002/02**

(51) Int Cl.$^7$: **H04L 9/00**, H04B 1/66

(21) Application number: **94830509.9**

(22) Date of filing: **28.10.1994**

(54) **Subband coding with pitchband predictive coding in each subband**

Teilbandkodierung mit auf Tonhöhen basierter Prädiktionskodierung in jedem einzelnen Teilband

Codage de signaux en sous-bandes avec codage prédictif basé sur la hauteur du ton dans chaque sous-bande

(84) Designated Contracting States:
**AT BE CH DE DK ES FR GB GR IT LI NL PT SE**

(43) Date of publication of application:
**01.05.1996 Bulletin 1996/18**

(73) Proprietor: **RAI RADIOTELEVISIONE ITALIANA (S.p.A.)**
**00195 Roma (IT)**

(72) Inventor: **Dimino, Giorgio**
**I-10153 Torino (IT)**

(74) Representative: **Spandonari, Carlo, Dr. Ing.**
**Spandonari & Modiano s.r.l. corso Duca degli Abruzzi 16**
**10129 Torino (IT)**

(56) References cited:
**EP-A- 0 424 016**     **US-A- 4 538 234**

**EP 0 709 981 B1**

**Description**

This invention is concerned with a process for encoding digital audio signals by separating the signals into subbands, and also with a device for implementing the process.

As known, a digital audio signal comprises one, two, or several bitstreams, known as audio channels and containing the sound information, according to whether the signal is monophonic, stereophonic or multiphonic (or multichannel). The bitstreams comprising the signals are all sampled at the same sampling rate: according to Recommendation 646 of ITU-R, this rate can be chosen among the values 32 kHz, 44,1 kHz and 48 kHz, the last being generally used in professional environments. Each sample may be quantized with a variable number of bits, depending on the application. If the maximum volume range perceivable by the human ear is desired, then the samples should be quantized with at least 16 bits. Therefore, assuming a sampling rate of 48 kHz and a 16-bit quantization, a monophonic signal would need a continuous bitstream of 768 kbit/s in transmission. This value must be multiplied by the number of channels, if the signal is multichannel. One can see that the transmission of those signals would require transmission channels of a very large capacity, generally larger than the capacity of conventional radio broadcasting channels, and so than the capacity of signal storage media, such as magnetic tapes for nonprofessional use.

Accordingly, in order to reduce the bitrates of such digital audio signals without appreciably degrading the sound quality from the standpoint of human perception, it is known to break down the signal into frequency subbands by means of a digital filterbank and to quantize the signal contained in each subband, using information obtained from a perceptual analysis of the signal, based on a model that, by simulating the behaviour of the human ear, determines at all instants which is the perceivable volume range in each frequency subband. A band reduction method of this kind is disclosed, for instance, in Y.F. Dehery, G. Stoll, L.v.d. Kerkhof, "MUSICAM Source Coding for Digital Sound", EBU Technical Review, No. 237. Such coding, as shown by B.C.J. Moore, "An Introduction to the Psychology of Hearing", Academic Press, London, can remove from the original signal all information that, due to physiologic reasons, does not contribute to the perception of the sound, and which, accordingly, is termed irrelevant.

In order to carry out the above perceptual analysis, the signal is subdivided in windows of constant duration, generally of 10 to 20 ms, which are called frames. The bitstream generated by the encoding of one frame may be constant or not, but, since most available transmission channels require a constant-speed bitstream, where the coding of a frame does not generate a constant quantity of bits, a buffer is used, which fills up at a variable speed and empties at constant speed. In any case, the speed of the bitstream from the coder must be matched to the channel speed, in order to avoid information loss and consequently errors in decoding.

Since the amount of bits required for encoding an audio frame transparently, i.e. without causing audible degradation of the signal, varies as a function of the signal itself, when channels of limited capacity are used, such as in commercial broadcasting or in storing the signal upon a magnetic or optical support, the subband samples may turn out to be quantized with a number of bits which is smaller than required by the perceptual analysis, so that a perceivable quantization noise is created.

In order to reduce the redundancy of a generic digital signal, a technique has also been proposed which is known as ADPCM (Adaptive Differential Pulse Code Modulation), e.g. as disclosed in J.G. Proakis, "Digital Communications", McGraw-Hill, New York. In this technique, a signal sample entering the encoder is compared with a sample immediately preceding in time (or with a weighted average of several immediately preceding samples), and the residue, or difference, between the actual sample and its prediction is applied to the quantizer. For a better correction, the prediction is reconstructed from the output of the encoder, using prediction coefficients that are developed as also taught by Proakis, op. cit.

The above ADPCM technique has been successfully applied to video signals, where signal samples which are close in time or in space are often almost identical (quasi static images or areas of quasi uniform color), and therefore give rise to residues close to zero. However, the technique is ineffective for audio signals, because they comprise rapidly changing, indeed oscillating, waveshapes, which would give rise to mostly large residues, having an information content not less than that of the original signal.

The main object of the invention is therefore to provide a process for encoding a digital audio signal, as well as a coder for implementing it, such as to reduce the bitstream generated in the coding process, without increasing the quantization noise in the subband samples for a wide class of audio signals, while providing a performance not worse than the known processes with signals not belonging to that class.

The invention attains the above and other objects and advantages, such as will appear from the following disclosure, by a process for encoding an input digital audio signal by breaking it down into a plurality of frequency subbands and requantization according to a predetermined perceptual model, and for delivering an output digital audio signal in form of a sequence of frames, each containing information on the course of each subband within a predetermined time window, characterized in that residues are formed by subtracting from said subbands, in each window, respective predictions, said respective predictions are reconstructed from the requantized signals by means of a weighted average of a plurality of samples preceding in time by respective delay intervals, chosen for each subband, said residues formed are requantized and said requantized residues and said prediction coefficients are packed together into said frames.

The invention also provides an encoder for digital audio signals, including a filterbank for breaking down said digital audio signals into a plurality of frequency subbands, a quantizer for receiving subband signals and requantizing them under control of a bit allocator governed by a predetermined perceptual model in order to remove irrelevant information from the subband signals, and a formatter which receives the quantizer's output signals and packs them in frames, characterized in that the encoder further includes circuit means for receiving the quantizer's output and reconstructing predictions of the current sample as a weighted average of a plurality of samples preceding in time by a delay interval chosen for each subband within a window, and an adder receiving the outputs of the breakdown filterbank and the predictions and generating a residue as difference which is fed to the quantizer, and in that said formatter includes the value of said delay interval in the frames.

The invention will now be described in more detail with reference to a few preferred embodiments, which are shown in the attached drawings, and which are given by way of illustrative and nonlimiting example:

Fig. 1 is a block diagram of a subband encoder for digital audio signals according to the prior art;

Fig. 2 is a block diagram of a decoder of the prior art, for operation in association with the encoder of Fig. 1;

Fig. 3 is a block diagram of a subband encoder according to a first preferred embodiment of the invention;

Fig. 4 is a block diagram of a decoder for operation in association with the encoder of Fig. 3;

Fig. 5 shows the operation of predictor PR in the encoder of Fig. 4;

Fig. 6 is a block diagram of a subband encoder according to a second preferred embodiment of the invention;

Fig. 7 is a block diagram of a decoder for operation in association with the encoder of Fig. 6;

Fig. 8 is a modification of the encoder of Fig. 6; and

Fig. 9 is a modification of the decoder of Fig. 7.

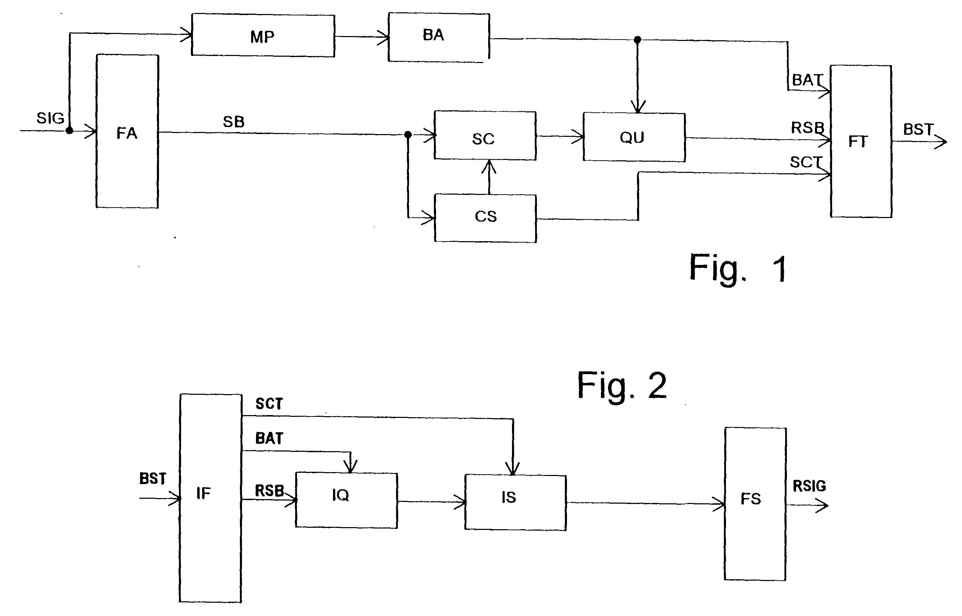

With reference to Fig. 1, in a typical subband encoder without an output buffer, shown by way of example, a digital audio signal SIG is subdivided in 24-ms windows, and each window is encoded according to the following process. Signal SIG is fed to an analyzing filterbank FA, which converts it into a signal SB comprising 32 components, each component containing the portion of signal SIG which falls within a given frequency subband. The choice of 32 subbands, while typical, is given by way of example, the number of components, as well as the window size, being open to arbitrary choice. Block CS sets for each subband suitable scalefactors for normalizing signal SB, as known to the person skilled in the art. The normalization operation consists in shifting the signal to maximum admissible level, by multiplication by a suitable scalefactor. This operation is necessary in order to obtain the best advantage from the levels available after quantization. After normalization in block SC, signal SB is fed to a quantizer QU, and gives rise to an output signal RSB.

Concurrently, signal SIG is fed to a circuit block MP, which, on the basis of a predetermined perceptual model, e.g. as defined in ISO-IEC International Standard 11172-3, determines the volume range that each subband is to have for the added quantization noise not to be perceivable. Circuit MP controls a bit allocator BA, which determines, from the available number of bits and the information received from the perceptual model, how many bits should be allocated to the samples in each subband, and drives quantizer QU accordingly, through a signal BAT.

Finally, a formatting circuit block FT assembles the frame, which is then sent to the transmission channel. The frame should contain the bit allocation signal BAT, the scalefactors SCT, and obviously the audio samples RSB from subbands SB. The transmitted stream therefore comprises a continuous sequence of frames, each containing the information necessary to reconstruct 24 ms of audio.

An associated decoder, shown on Fig. 2, inverts the operations of formatting (IF), quantization (IQ) and scaling (IS), respectively, the resulting signal PCM being reconstructed by synthesizing filter FS.

The above example, for simplicity, refers to a coder device for a monophonic signal; for a multichannel signal, each channel should be processed separately by a device as described. Portions of the encoding may also be made conjointly on all audio channels, in order to reduce the inter-channel redundancy and to optimize the bit allocation; the fundamental pattern, however, remains unchanged.

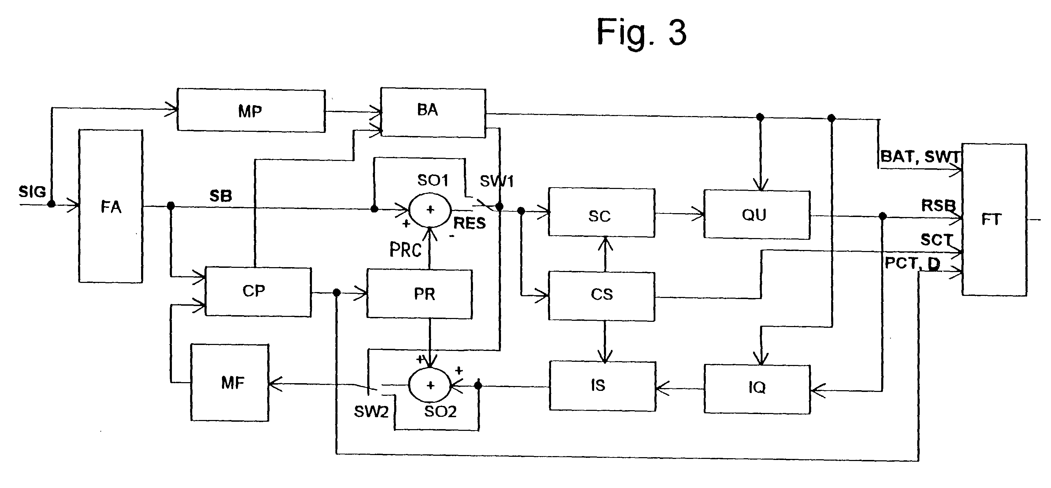

Fig. 3 shows a block diagram of a subband encoding system similar to the system of Fig. 1, which has been improved according to a preferred embodiment of the invention. The system comprises the same blocks and operative connections of Fig. 1, but it further incorporates a redundancy reduction system which is based on prediction. The system is similar to what is known as ADPCM, but is modified as described below, for use with audio signals.

According to the above operational principle, instead of signal SB being fed to quantizer QU directly, in the inventive system the subband signals SB are compared with respective reconstructed samples, or predictions, PRC, thus obtaining difference signals, or residues, which are themselves fed to the quantizer. The reconstructed samples, according to the invention, belong to a time instant preceding the instant of the current sample by a variable time (or number of samples), which is determined in each case so that the residue is minimized. The choice of the delay is based on the assumption, which is valid in many cases and certainly for musical signals, that the subband signals have quasi-periodic patterns: it is then advantageous to choose a time delay equal to the pseudo-period (or possibly half the pseudoperiod) of the subband signal in the window that is processed at that time.

An adder SO1 then computes the prediction error between the sample SB and the prediction PRC of that sample (described below), giving rise to an output residue RES. Residue RES, through a switch SW1, is then normalized in a scaling circuit SC and is quantized in the quantizer QU, identically to Fig. 1.

Signal RSB at the output of quantizer QU is subjected to inverse quantization in a block IQ, to denormalization in a block IS, and finally to reconstruction of the original signal in a second adder SO2, which adds together the predicted component and the transmitted component, to deliver a co-decoded version, which is loaded to a memory MF through a switch SW2. The co-decoded version is fed by memory MF, together with signal SB, to a block CP which computes prediction coefficients PCT and feeds them to a predictor PR for calculation of the prediction. The predictor feeds to adder SO1 the above mentioned prediction.

The prediction coefficients PCT are, in practice, multiplicative factors of the prior samples that are stored in memory MF. Predictor PR constructs the prediction of the current sample, using both the prediction coefficients PCT and a parameter D, which is a measure of a delay of the current sample with respect to the prior samples, used for computing the prediction.

The frame is assembled in formatter FT similarly to the encoder of Fig. 1. However, in this case the signal SWT signifying the use of the prediction is also sent to the formatter for each subband, as well as prediction coefficients PCT and delay parameter D, if the prediction is operative.

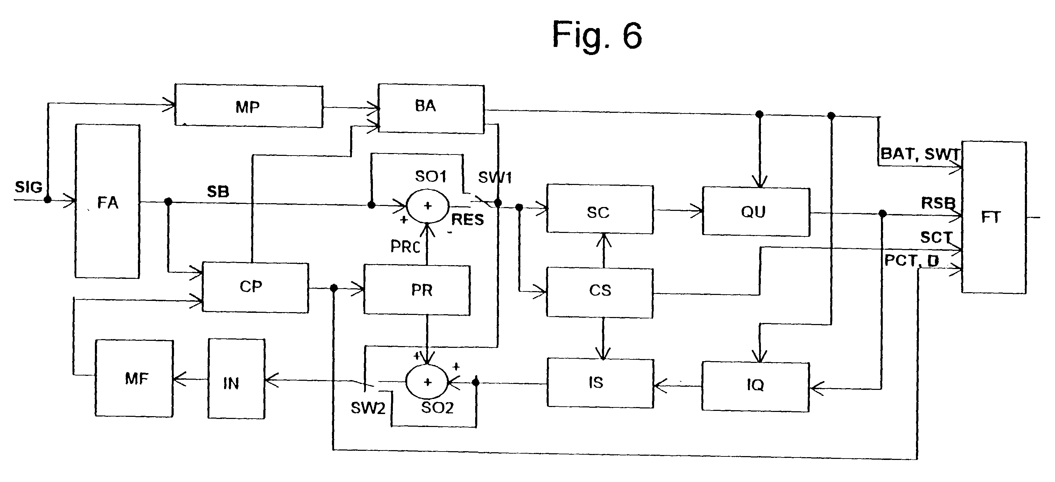

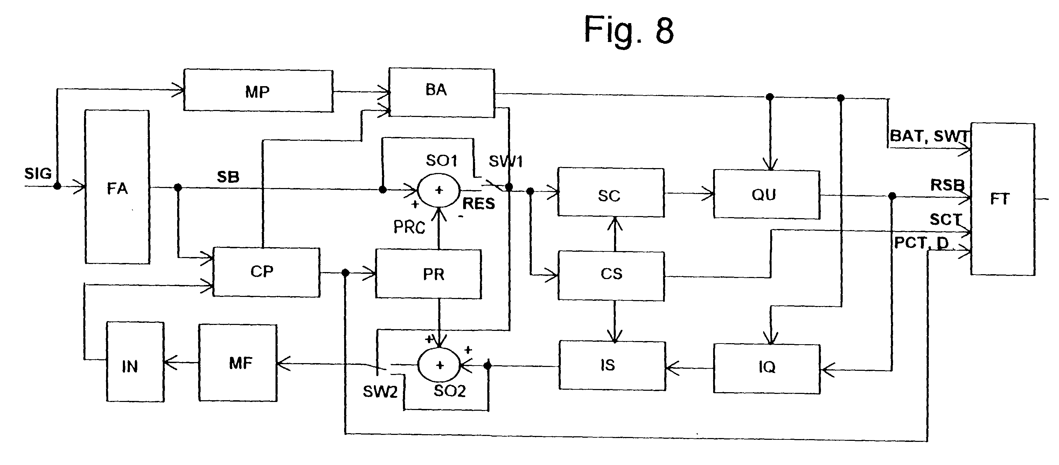

Ideally, delay parameter D is chosen so that it best approximates the period of the harmonic component where most of the power of the subband signal is concentrated. In order to better understand the meaning of that parameter, it is now made reference to Fig. 5, where an exemplary fragment of the waveshape of a subband signal is shown. According to the literature, the prediction X'(n) of the current sample is obtained as a weighted average of the N most recent prior samples:

$$X'(n) = a0 * X(n) + a1 * X(n-1) + aN * X(n-N+1)$$

where the weighting is made by means of as many prediction coefficients, computed in a way that minimizes the prediction error in the signal window which must be predicted.

According to the principles of the invention, prediction X'(n) is also computed on the basis of N prior samples, but these samples ar chosen at a distance or interval D, D+1, ... , D+N-1 from the current sample, D being the above mentioned delay parameter:

$$X'(n) = a0 * X(n-D) + a1 * X(n-D-1) + aN * X(n-D-N+1),$$

where delay parameter D is also computed in a way that minimizes the prediction error.

The reason for basing the prediction on a delayed signal resides in the pseudoperiodic nature of many audio signals, and, among these, a class of interest is musical signals. The periodicity features of the signal are emphasized by the breakdown into subbands: if a harmonic signal is considered, such as emitted by most musical instruments, if the subbands are narrow enough, a low number of harmonics will fall into each subband, and the signal will tend to be sinusoidal. It is therefore apparent that, in these conditions, it is more suitable to use, as a basis for prediction, the coefficients which are co-positioned to the current one in the prior period, rather than those immediately adjacent, which have generally a low correlation. Since the signals commonly regarded as "noise" have no periodicity features and have a low correlation, in implementing an encoding system for generic signals, it is preferable to have the possibility of inhibiting the prediction, so that the operation of the system with respect to the prior art is never at a disadvantage.

The delay parameter D can be determined in several ways. In the most elementary case, D can be established at a constant value, equal to the center frequency in each subband. In this case, if desired, the incorporation of the values of parameter D in the frame may be dispensed with.

In a more sophisticated embodiment of the process, parameter D is determined by computing the prediction error, in the window under consideration, with a plurality of delay intervals starting from a predetermined minimum value (in practice, 1) up to a predetermined maximum value, and by choosing for the coding the value that gives rise to the minimum prediction error.

Another method of determining parameter D consists in computing the auto-correlation function of the signal window under consideration, within a variability range of D, and in choosing the value of D corresponding the the maximum of the auto-correlation function.

Switch SW1 is switched by bit allocator BA so that signal SB is routed to subsequent processing, rather than residue RES, whenever prediction is not advantageous for encoding: in fact, the prediction coefficients and the delay parameter must be transmitted to the decoder if the decoder is to correctly reconstruct the signal, and, where the prediction does not reduce the signal entropy, they would merely cause a waste of bits. Switch SW2 is driven parallelly to SW1, and it also cuts out prediction whenever it is not advantageous, so that the prediction error RES is computed by using only information available to the decoder.

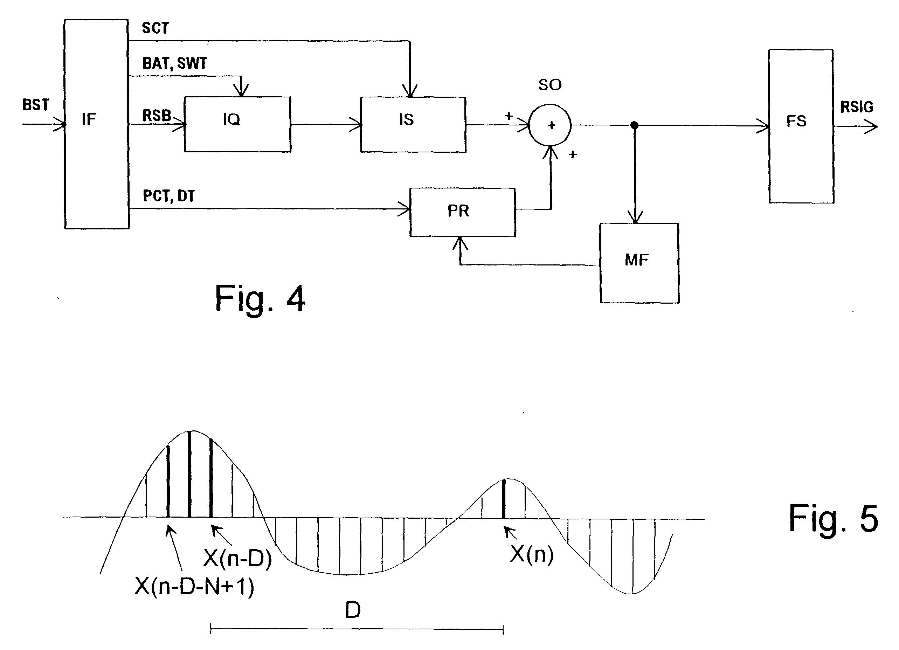

The decoder, shown in Fig. 4, is substantially similar to the lower branch of the diagram of Fig. 3, except that the signal must eventually be fed to a bank of synthesizing filters FS.

A second preferred embodiment of the invention is shown on Fig. 6. This embodiment differs from the first one in having a block IN at the input of memory MF. Block IN comprises an oversampling interpolator as described in Oppenheim and Shafer, implemented according to techniques known in the art, and allowing the number of samples per unit of time to be made denser without altering signal content. With this feature, which allows the prediction to be made from an oversampled signal, a more accurate positioning of the delay can be obtained, since the resolution is increased by the oversampling factor. Obivously, in this embodiment, the size of memory MF increases with the chosen oversampling factor.

The same object can also be attained by connecting the interpolator downstream of memory MF, as shown on Fig. 8. In this case, block IN can be an interpolator of a more general type, e.g. of mathematical type, i.e., defined by an interpolation function that is evaluated in the required point, as a function of the delay. The delay may now take fractional values. The memory size need not be increased with this embodiment, but a larger computing power may be required.

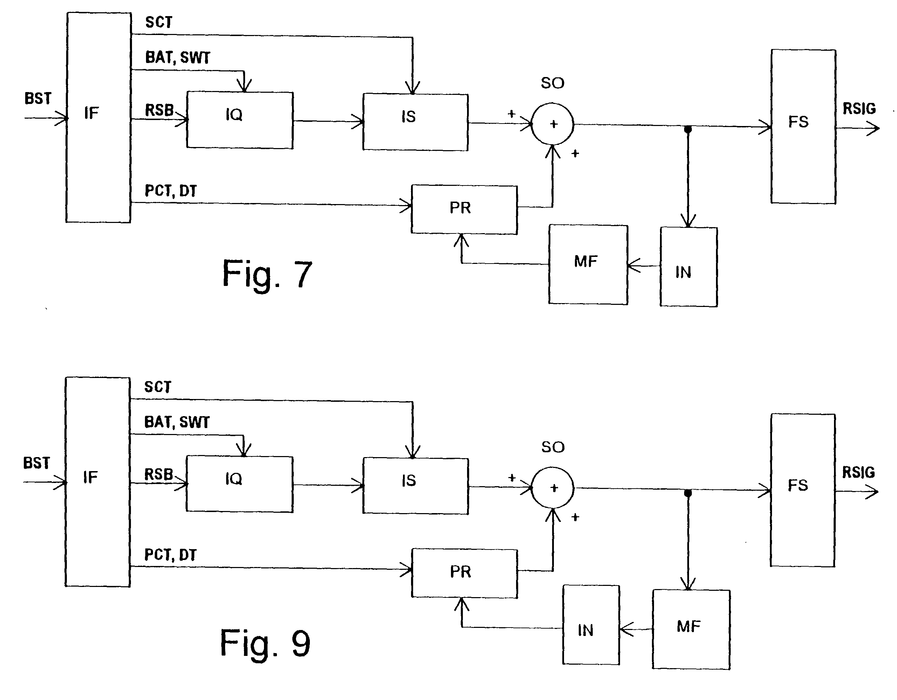

In both cases, the decoder (Figs. 7 and 9) needs no additional information, but must include the same block IN, in order to be able to reconstruct the signal with the same accuracy of the encoder.

A few preferred embodiments of the invention have been disclosed. However, many other changes and modifications, obvious for the person skilled in the art, fall within the scope of the invention.

**Claims**

1. Process for encoding an input digital audio signal (SIG) by breaking down into a plurality of frequency subbands and requantization according to a predetermined perceptual model, and for delivering an output digital audio signal in form of a sequence of frames, each containing information on the course of each subband within a predetermined time window, **characterized in that** residues are formed by subtracting from said subbands in each window, respective predictions, said respective predictions are reconstructed from the requantized signals by means of a weighted average of a plurality of samples preceding in time by respective, delay intervals chosen for each subband,
said residues formed are requantized and
said requantized residues (RSB) and said prediction coefficients (PCT, D) are packed together to form said frames.

2. The coding process of claim 1, **characterized in that** each of said delay intervals is determined, for each subband in each window, by computing the residue with a plurality of delay intervals, starting from a predetermined minimum value up to a predetermined maximum value, and choosing for the encoding the value causing the largest reduction of redundancy.

3. The coding process of claim 1, **characterized in that** each of said delay intervals is determined, for each subband in each window, by computing the auto-correlation function of the signal in the window as a function of the delay interval, and choosing for the encoding the value for which the autocorrelation function is at a maximum.

4. The coding process of one of claims 1 to 3, **characterized in that** said delay intervals are also packed into the frames.

5. The coding process of one of claims 1 to 4, **characterized in that** the predictions are computed from an oversampled version of the signal.

6. The coding process of one of claims 1 to 4, **characterized in that**, in the computation of the predictions, fractional values are accepted, and the samples used for constructing the predictions are obtained by interpolation, depending on the value of the fractional part of the delay.

7. The coding process of one of claims 1 to 6, **characterized in that**, for each subband in each window, the information contents of the residue and of the subband signals are compared and, if the subband signal has a lower information content, the latter is requantized rather than the residue, and a code signifying such fact is packed into the frame.

8. Encoder for digital audio signals, including a filterbank (FA) for breaking down said digital audio signals (SIG) into a plurality of frequency subbands (SB), a quantizer (QU) for receiving subband signals and requantizing them under control of a bit allocator (BA) governed by a predetermined perceptual model in order to remove irrelevant information from the subband signals, and a formatter (FT) which receives the quantizer's output signals and packs them in frames, **characterized in that** the encoder further includes circuit means (IQ, IS, SO2, MF, CP, RP) for receiving the quantizer's output (RSB) and reconstructing predictions of the current sample as a weighted average of a plurality of samples preceding in time by a delay interval chosen for each subband within a window, and an adder (SO1) receiving the outputs of the breakdown filterbank (FA) and the predictions (PRC) and generating a residue (RES) as difference which is fed to the quantizer (QU), and **in that** said formatter (FT) includes the value of said delay interval (D) in the frames.

9. The digital audio signal encoder of claim 8, **characterized in that** said circuit means includes a memory (MF) receiving at its input the data generated by an inverse quantization chain (IQ, IS) driven by the quantizer's output, and predictor means (CP, PR) using the data stored in memory to generate the predictions.

10. The digital audio signal encoder of claim 8 or 9, **characterized in that** it further comprises a switch (SW1) driven to cut out said adder (SO1) and to feed the current sample directly to the quantizer whenever sai circuit means determines that the encoding of the residue (RES) requires a number of bits larger than the encoding of the current sample.

11. The digital audio signal encoder of one of claims 8 to 10, **characterized in that** it further comprises an interpolator receiving said signals at the output of the inverse quantization chain for computing a prediction corresponding to a fractional delay.

**Patentansprüche**

1. Verfahren zum Kodieren eines digitalen Eingangsaudiosignales (SIG) durch Teilung in eine Mehrzahl von Frequenzteilbändern und Requantisierung gemäß einem vorbestimmten Wahrnehmungsmodell und zum Liefern eines digitalen Ausgangsaudiosignales in Form einer Folge von Datensätzen, die jeweils Informationen über den Verlauf jedes Teilbandes in einem vorbestimmten Zeitfenster enthalten, **dadurch gekennzeichnet, daß** Residuen gebildet werden, indem in jedem Fenster von den Teilbändern entsprechende Vorhersagen abgezogen werden, wobei die entsprechenden Vorhersagen aus den requantisierten Signalen mittels eines gewichteten Mittelwertes einer Mehrzahl von Abtastwerten rekonstruiert werden, die zeitlich um entsprechende für jedes Teilband ausgewählte Verzögerungsintervalle vorausgehen, die gebildeten Residuen requantisiert werden, und die requantisierten Residuen (RSB) und die Koeffizienten der Vorhersagen (PCT, D) gruppiert werden, um die Datensätze zu bilden.

2. Das Kodierverfahren von Anspruch 1, **dadurch gekennzeichnet, daß** jedes der Verzögerungsintervalle für jedes Teilband in jedem Fenster bestimmt wird, indem das Residuum mit einer Mehrzahl von Verzögerungsintervallen beginnend von einem vorbestimmten Minimalwert bis zu einem vorbestimmten Maximalwert verarbeitet werden und für das Kodieren der Wert gewählt wird, der die größte Reduzierung der Redundanz verursacht.

3. Das Kodierverfahren von Anspruch 1, **dadurch gekennzeichnet, daß** jedes der Verzögerungsintervalle für jedes Teilband in jedem Fenster bestimmt wird, indem die Autokorrelationfunktion des Signales in dem Fenster als Funktion des Zeitintervalles verarbeitet wird und für das Kodieren der Wert gewählt wird, für den die Autokorrelationfunktion ein Maximum aufweist.

4. Das Kodierverfahren gemäß einem der Ansprüche 1 bis 3, **dadurch gekennzeichnet, daß** die Zeitintervalle auch in die Datensätze eingesetzt werden.

5. Das Kodierverfahren gemäß einem der Ansprüche 1 bis 4, **dadurch gekennzeichnet, daß** die Vorhersagen aus einer überabgetasteten Version des Signales berechnet werden.

6. Das Kodierverfahren gemäß einem der Ansprüche 1 bis 4, **dadurch gekennzeichnet, daß** bei der Berechnung der Vorhersagen fraktionale Werte akzeptiert werden und die Abtastwerte, die zum Konstruieren der Vorhersagen verwendet werden, in Abhängigkeit des Wertes des fraktionalen Teiles der Verzögerung durch Interpolation erhalten werden.

7. Das Kodierverfahren gemäß einem der Ansprüche 1 bis 6, **dadurch gekennzeichnet, daß** für jedes Teilband in jedem Fenster die Informationsinhalte des Residuums und der Teilbandsignale verglichen werden und, wenn das Teilbandsignal einen geringeren Informationsinhalt aufweist, eher das letztere als das Residuum requantisiert wird, wobei ein Kode in den Datensatz eingesetzt wird, der einen derartigen Umstand angibt.

8. Kodierer für digitale Audiosignale mit einer Filteranordnung (FA) zum Unterteilen der digitalen Audiosignale (SIG) in eine Mehrzahl von Frequenzteilbändern (SB), einem Quantisierer (QU) zum Empfangen von Teilbandsignalen und Requantisieren derselben unter Steuerung eines Bitzuordners (BA), der mittels eines vorbestimmten Wahrnehmungsmodells gesteuert wird, um nicht relevante Informationen aus den Teilbandsignalen zu entfernen, und einem Formatierer (FT), der die Ausgangssignale des Quantisierers empfängt und diese in Datensätze gruppiert, **dadurch gekennzeichnet, daß** der Kodierer ferner Schaltkreiseinrichtungen (IQ, IS, SO2, MF, CP, PR) aufweist, um die Ausgabe des Quantisierers (RSB) zu empfangen und Vorhersagen des aktuellem Abtastwertes als einen gewichteten Mittelwert einer Mehrzahl von Abtastwerten zu rekonstruieren, die zeitlich um ein für jedes Teilband in einem Fenster gewähltes Verzögerungsintervall vorhergehen, und
einem Addierer (SO1), der die Ausgaben der Teilungsfilteranordnung (FA) und die Vorhersagen (PRC) empfängt und ein Residuum (RES) als Differenz erzeugt, die dem Quantisierer (QU) zugeführt wird, und der Formatierer (FT) den Wert des Verzögerungsintervalles (D) in die Datensätze einbindet.

9. Der Digitalaudiosignalkodierer gemäß Anspruch 8, **dadurch gekennzeichnet, daß** die Schaltkreiseinrichtungen einen Speicher (MF), der an seinem Eingang die Daten empfängt, die von einer von der Ausgabe des Quantisierers angesteuerten inversen Quantisierungskette (IQ, IS) erzeugt werden, und Vorhersageeinrichtungen (CP, PR) aufweisen, die die in dem Speicher gespeicherten Daten verwenden, um die Vorhersagen zu erzeugen.

10. Der Digitalaudiosignalkodierer gemäß Anspruch 8 oder 9, **dadurch gekennzeichnet, daß** er ferner einen Schalter (SW1) aufweist, der gesteuert wird, um den Addierer (SO1) zu umgehen und den aktuellen Abtastwert unmittelbar dem Quantisierer immer dann zuzuführen, wenn die Schaltkreiseinrichtungen feststellen, daß das Kodieren des Residuums (RES) eine höhere Anzahl von Bits als die Kodierung des aktuellen Abtastwertes erfordert.

11. Der Digitalaudiosignalkodierer gemäß einem der Ansprüche 8 bis 10, **dadurch gekennzeichnet, daß** er ferner einen Interpolator aufweist, der die Signale an dem Ausgang der inversen Quantisierungskette empfängt, um eine Vorhersage zu berechnen, die einer fraktionalen Verzögerung entspricht.

**Revendications**

1. Procédé pour le codage d'un signal numérique audio d'entrée (SIG) par la subdivision en plusieurs sous-bandes de fréquence et re-quantification selon un modèle de perception prédéterminé, et pour l'émission d'un signal numérique audio de sortie en forme d'une séquence de cadres, chacun contenant de l'information concernant le cours de chaque sous-bande dans une fenêtre temporelle prédéterminée, **caractérisé en ce que**

on forme des résidus en retranchant des prédictions respectives desdites sous-bandes, dans chaque fenêtre, on reconstitue lesdites prédictions respectives à partir des signaux re-quantifiés par une moyenne pondérée de plusieurs échantillons qui précèdent temporellement de respectifs intervalles de retard, choisis pour chaque sous-bande,

on requantifie lesdits résidus formés, et

on groupe lesdits résidus requantifiés (RSB) et les coefficients de prédiction (PCT, D) pour constituer lesdits cadres.

2. Le procédé de la revendication 1, **caractérisé en ce qu'**on détermine chacun desdits intervalles de retard, pour chaque sous-bande en chaque fenêtre, en calculant le résidu avec plusieurs intervalles de retard, à partir d'une valeur minimum prédéterminée jusqu'à une valeur maximum prédéterminée, et en choisissant pour le codage la valeur qui donne lieu à la plus grande réduction de redondance.

3. Le procédé de la revendication 1, **caractérisé en ce qu'**on détermine chacun desdits intervalles de retard, pour chaque sous-bande en chaque fenêtre, en calculant la fonction d'autocorrélation du signal dans la fenêtre en fonction de l'intervalle de retard, et en choisissant pur le codage la valeur pour laquelle la fonction d'auto-corrélation est maximum.

4. Procédé selon une des revendications 1 à 3, **caractérisé en ce qu'**on groupe dans les cadres lesdits intervalles de retard aussi.

5. Procédé selon une des revendications 1 à 4, **caractérisé en ce qu'**on calcule les prédictions à partir d'une version suréchantillonné du signal.

6. Procédé selon une des revendications 1 à 4, **caractérisé en ce que**, dans le calcul des prédictions, on accepte des valeurs fractionnaires, et on obtient les échantillons employés pour établir les prédictions par interpolation, selon la valeur de la part fractionnaire du retard.

7. Procédé selon une des revendications 1 à 6, **caractérisé en ce que**, pour chaque sous-bande dans chaque fenêtre, on confronte le contenut d'information du résidu et des signaux de sous-bande et, si le signal de sous-bande a un contenu d'information inférieur, on re-quantifie celui-ci au lieu du résidu, et on groupe dans le cadre un code indiquant ce fait.

8. Codeur de signaux numériques audio, comprenant un banc de filtres (FA) pour répartir lesdits signaux numériques audio (SIG) en plusieurs sous-bandes (SB), un quantificateur (QU) pour recevoir les signaux de sous-bande et pour les requantifier sous le contrôle d'un allocateur de bits (BA) gouverné par un modèle de perception prédéterminé ayant le but d'éliminer l'information irrelevante des signaux de sous-bande, et un formateur (FT) recevant les signaux de sortie du quantificateur et les groupant en cadres, **caractérisé en ce que** le codeur comprend aussi bien des circuits (IQ, IS, SO2, MF, C7, PR) pour recevoir la sortie (RSB) du quantificateur et pour reconstituer des prédictions de l'échantillon courant comme moyenne pondérée de plusieurs échantillons précédant temporellement d'un interval de retard choisi pour chaque sous-bande dans une fenêtre , et

un sommateur (SO1) recevant les sorties du banc de filtres (FA) de répartition et les prédictions (PRC) et engendrant un résidu (RES) comme différence qu'on alimente au quantificateur (QU), et **en ce que** ledit formateur (FT) inclut dans les cadres la valeur dudit interval de retard (D).

9. Le codeur de signaux numériques audio de la revendication 8, **caractérisé en ce que** lesdits circuits comprennent une mémoire (MF) recevant comme entrée les données engendrées par une chaîne de quantification inverse (IQ, IS) pilotée par la sortie du quantificateur, aussi bien que des moyens de prédiction (CP, PR) employant les données stockées en mémoire pour engendrer les prédictions.

10. Le codeur de signaux numériques audio de la revendication 8 ou 9, **caractérisé en ce qu'**il comprend aussi bien un interrupteur (SW1) piloté pour désactiver ledit sommateur (SO1) et alimenter l'échantillon courant directement au quantificateur lorsque lesdits circuits établissent que le codage du résidu (RES) requiert un nombre de bits plus grand que le codage de l'échantillon courant.

11. Le codeur de signaux numériques audio d'une des revendications 8 à 10, **caractérisé en ce qu'**il comprend aussi bien un interpolateur recevant lesdits signaux à la sortie de la chaîne de quantification inverse pour calculer une prédiction correspondante à un retard fractionnaire.

Fig. 1

Fig. 2

Fig. 3

Fig. 4

Fig. 5

EP 0 709 981 B1

Fig. 6

EP 0 709 981 B1

Fig. 8

Fig. 7

Fig. 9

EP 0 709 981 B1